# EUROPÄISCHE PATENTANMELDUNG

(11) **EP 2 384 857 A1**
(43) Veröffentlichungstag der Anmeldung: **09.11.2011**
(21) Anmeldenummer: 10161778.5
(22) Anmeldetag: 03.05.2010
(51) Int. Cl.: B25B 11/00, B23Q 3/154

(54) **Vorrichtung zum Einspannen eines Werkstücks**

(71) Anmelder: Uhlmann Pac-Systeme GmbH & Co. KG, 88471 Laupheim (DE)
(72) Erfinder: Rieger, Paul, 88447 Warthausen (DE); Schmid, Hannes, 89614 Öpfingen (DE)
(74) Vertreter: Wächter, Jochen

(57) **Zusammenfassung**

Die Vorrichtung zum Einspannen eines Werkstücks (4) auf einer aktivierbaren magnetischen Arbeitsplatte (6) umfasst einen magnetischen Backen (8), der im aktivierten Zustand der Arbeitsplatte (6) magnetisch auf der Arbeitsplatte (6) fixiert ist, einen neben dem Backen (8) angeordneten magnetischen Keil (10), der zwischen einer oberen Ruheposition im deaktivierten Zustand der Arbeitsplatte (6) und einer unteren Arbeitsposition im aktivierten Zustand der Arbeitsplatte (6) vertikal verschiebbar ist, wobei der Keil (10) eine dem Backen (8) abgewandte schräge erste Seitenfläche (18) derart aufweist, dass sich der Keil (10) nach unten hin verjüngt, und einen über die Arbeitsplatte (6) horizontal verfahrbaren, nicht-magnetischen Schlitten (12), der eine erste Seitenfläche (22) zum Kontakt mit dem Werkstück (4) aufweist und der eine schräge zweite Seitenfläche (20) derart aufweist, dass sich der Schlitten (12) nach unten hin verbreitert, wobei die schräge erste Seitenfläche (18) des Keils (10) beim Wechsel von der Ruheposition in die Arbeitsposition des Keils (10) an der schrägen zweiten Seitenfläche (20) des Schlittens (12) entlanggleitet und dadurch eine horizontale Verschiebung des Schlittens (12) bewirkt.

## Beschreibung

Die vorliegende Erfindung betrifft eine Vorrichtung zum Einspannen eines Werkstücks auf einer aktivierbaren magnetischen Arbeitsplatte.

Eine Schleifmaschine zum Schleifen eines Werkstücks kann beispielsweise über eine Arbeitsplatte verfügen, die mit einem Elektromagneten oder einem aktivierbaren Permanentmagneten ausgestattet ist. Zu schleifende ferromagnetische Werkstücke können in der gewünschten Position auf die Arbeitsplatte gesetzt und dann durch Aktivieren des Magneten fixiert werden. Somit ist gewährleistet, dass das Werkstück während des kompletten Schleifvorgangs exakt positioniert bleibt.

Während bei ferromagnetischen Werkstücken keine gesonderte Spannvorrichtung notwendig ist, müssen nicht-magnetische Werkstücke anderweitig auf der Arbeitsplatte fixiert werden. Bislang erfolgte dies beispielsweise über Stahlklötze, welche von vier Seiten an das nicht-magnetische Werkstück angelegt werden und nach Aktivieren des Magneten mit einem Hammer an das Werkstück geklopft werden.

Letzteres Verfahren hat allerdings mehrere signifikante Schwächen. Die Stahlklötze sind nicht dazu geeignet, das Werkstück permanent unter Spannung zu halten, und daher ist es in vertikaler Richtung nicht ausreichend fixiert. Beim ersten Kontakt der Schleifscheibe mit dem Werkstück treten, bedingt durch die Rotation der Scheibe, abhebende Kräfte auf. Aus diesem Grund kann es vorkommen, dass sich ein Werkstück während des Schleifens vom Tisch abhebt. Dadurch ändert sich die Schleifebene und das Werkstück wird unbrauchbar. Außerdem ist das Einspannen von Werkstücken mit dieser Methode aufwändig.

Neben der erwähnten Methode existiert auch eine Vielzahl von mechanischen Einspannvorrichtungen für Werkstücke, die ebenfalls erheblichen manuellen Einsatz erfordern.

Der vorliegenden Erfindung liegt die Aufgabe zugrunde, eine Vorrichtung zum Einspannen eines Werkstücks zu schaffen, welche auch nicht-magnetische Werkstücke permanent unter ausreichender Spannung hält, gleichzeitig aber eine Deformation der Werkstücke ausschließt. Die Benutzung der Vorrichtung soll außerdem einfach und zeitsparend sein und die Vorrichtung soll universell für eine Vielzahl von unterschiedlichen Werkstücken einsetzbar sein.

Diese Aufgabe wird durch die Merkmale des Anspruchs 1 gelöst.

Erfindungsgemäß weist die Vorrichtung zum Einspannen eines Werkstücks auf einer aktivierbaren magnetischen Arbeitsplatte einen magnetischen Backen auf, der im aktivierten Zustand der Arbeitsplatte magnetisch auf der Arbeitsplatte fixiert ist, außerdem einen neben dem Backen angeordneten magnetischen Keil, der zwischen einer oberen Ruheposition im deaktivierten Zustand der Arbeitsplatte und einer unteren Arbeitsposition im aktivierten Zustand der Arbeitsplatte vertikal verschiebbar ist, wobei der Keil eine dem Backen abgewandte schräge erste Seitenfläche derart aufweist, dass sich der Keil nach unten hin verjüngt. Außerdem weist die Vorrichtung einen über die Arbeitsplatte horizontal verfahrbaren, nicht-magnetischen Schlitten auf, der eine erste Seitenfläche zum Kontakt mit dem Werkstück aufweist und der eine schräge zweite Seitenfläche derart aufweist, dass sich der Schlitten nach unten hin verbreitert, wobei die schräge erste Seitenfläche des Keils beim Wechsel von der Ruheposition in die Arbeitsposition des Keils an der schrägen zweiten Seitenfläche des Schlittens entlanggleitet und dadurch eine horizontale Verschiebung des Schlittens bewirkt.

Mit dieser Anordnung wird ein sicheres Einspannen von Werkstücken beliebiger Größe halbautomatisch und zeitsparend ermöglicht.

Vorzugsweise weist der Backen außerdem eine erste schräge Seitenfläche derart auf, dass sich der Backen nach unten hin verbreitert, und der Keil weist eine dem Backen zugewandte schräge zweite Seitenfläche derart auf, dass sich der Keil nach unten hin verjüngt, wobei die schräge zweite Seitenfläche des Keils beim Wechsel von der Ruheposition in die Arbeitsposition des Keils an der schrägen ersten Seitenfläche des fixierten Backens entlanggleitet und dadurch die horizontale Verschiebung des Schlittens verstärkt. Mit dieser Anordnung wird das Verhältnis von vertikaler Bewegung des Keils zu horizontaler Bewegung des Schlittens optimiert.

In einer bevorzugten Ausführungsform weist die Vorrichtung einen Deckel auf, der fest mit dem Backen verbunden ist und Langlöcher aufweist, in denen am Schlitten befestigte Führungselemente, vorzugsweise Senkschrauben, geführt sind. Dies erhöht die Kompaktheit der Vorrichtung und gewährleistet eine gezielte Führung des Schlittens.

Ein bevorzugtes Material für den Backen und den Keil ist Stahl, während der Schlitten vorzugsweise aus Aluminium gebildet ist. Damit werden die magnetischen bzw. nicht-magnetischen Eigenschaften der unterschiedlichen Elemente kostengünstig gewährleistet.

In einer bevorzugten Ausführungsform entspricht die Neigung der schrägen ersten Seitenfläche des Keils zur Vertikalen der Neigung der schrägen zweiten Seitenfläche des Schlittens zur Vertikalen und gleichzeitig entspricht die Neigung der schrägen zweiten Seitenfläche des Keils zur Vertikalen der Neigung der schrägen ersten Seitenfläche des Backens zur Vertikalen. Auf diese Weise wird die Passform zum optimalen Gleiten des Keils entlang des Backens und des Schlittens sichergestellt.

Es hat sich herausgestellt, dass zur Erzielung einer geeigneten Spannkraft die schräge erste Seitenfläche des Keils und die schräge zweite Seitenfläche des Keils einen Winkel zur Vertikalen von zwischen 3° und 10°, bevorzugt zwischen 5° und 7°, mehr bevorzugt 6° aufweisen.

Um eine ausreichende magnetische Anziehung des Keils durch die Arbeitsplatte zu gewährleisten und die Dimensionen der Vorrichtung möglichst gering zu halten, beträgt die maximale Höhendifferenz zwischen Ruheposition und Arbeitsposition des Keils 4 mm, bevorzugt 2 mm, mehr bevorzugt 0,5 mm.

Um nach erfolgter Bearbeitung des Werkstücks eine schnelle und einfache Entfernung der Vorrichtung vom Werkstück zu gewährleisten, weist die Vorrichtung vorzugsweise eine horizontale Federanordnung auf, die den Schlitten bei deaktivierter Arbeitsplatte in Richtung Backen drückt.

In einer bevorzugten Ausführungsform weist die horizontale Federanordnung mindestens eine im Schlitten befestigte, seitlich am Keil vorbeilaufende horizontale Schraube auf, von der zumindest ein Teil des Schaftes und der Kopf in einer in Richtung des Schlittens geschlossenen Ausnehmung im Backen angeordnet sind, und weist außerdem eine Schraubenfeder auf, die den Teil des Schaftes der Schraube innerhalb der Ausnehmung umgibt und bei Bewegung des Schlittens weg vom Backen durch den Kopf der Schraube zusammengedrückt wird. Damit wird auf einfache Weise eine Rückstellkraft auf den Schlitten in Richtung des Backens erzeugt.

Die einfache Entfernung der Vorrichtung vom bearbeiteten Werkstück wird zusätzlich dadurch erleichtert, dass die Vorrichtung eine vertikale Federanordnung aufweist, die den Keil bei deaktivierter Arbeitsplatte nach oben drückt.

In einer speziellen Ausführungsform weist die vertikale Federanordnung mindestens ein Federelement auf, das in einer Ausnehmung des Keils aufgenommen ist. Dieses Federelement ist von einem oberen Deckelelement, das am Keil fixiert ist, und einem unteren Passstift eingeschlossen, wobei der Passstift vertikal beweglich im Keil angeordnet ist und im Ruhezustand des Keils nach unten aus diesem hervorragt und mit einer Schulter an einem inneren Anschlag des Keils aufliegt. Hierdurch wird auf einfache Weise nach Deaktivierung der Arbeitsplatte eine Rückstellkraft auf den Keil nach oben ausgeübt.

Weitere Merkmale und Vorteile der vorliegenden Erfindung ergeben sich aus der nachfolgenden Beschreibung unter Bezugnahme auf die Zeichnungen.
- Fig. 1: ist eine Draufsicht auf zwei erfindungsgemäße Vorrichtungen zum Einspannen eines Werkstücks, die ein Werkstück zwischen sich festhalten;
- Fig. 2: ist eine schematische Darstellung des erfindungsgemäßen Prinzips der Vorrichtung zum Einspannen eines Werkstücks;
- Fig.3: ist eine Draufsicht auf eine bevorzugte Ausführungsform der erfindungsgemäßen Vorrichtung zum Einspannen eines Werkstücks ohne Oberschale und mit teilweise abgebrochenem Deckel;
- Fig. 4: ist eine Querschnittsansicht entlang der Linie A-A aus Fig. 3; und
- Fig. 5: ist eine Querschnittsansicht entlang der Linie B-B aus Fig. 3.

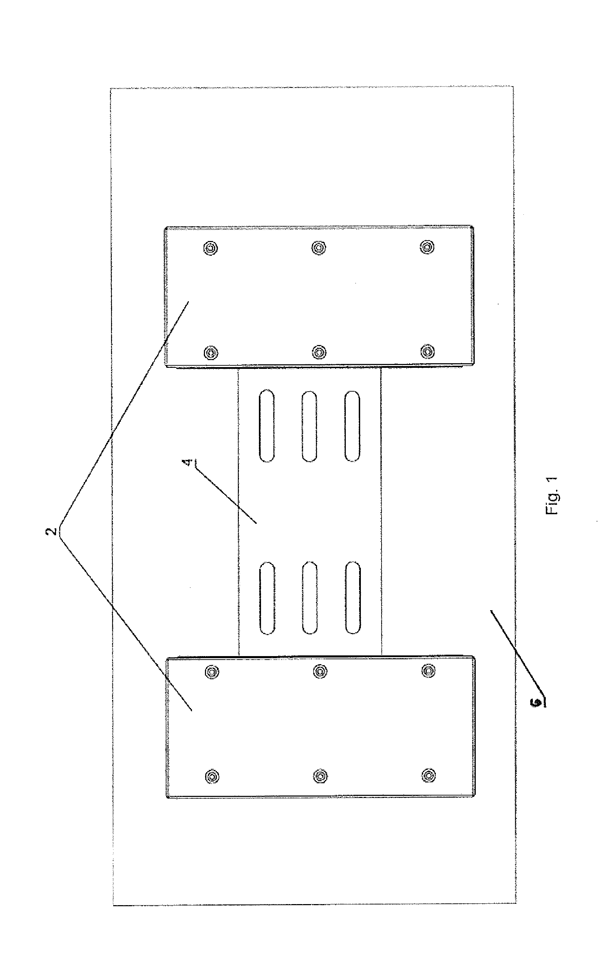

In Fig. 1 sind zwei Vorrichtungen 2 zum Einspannen eines Werkstücks 4 dargestellt, die ein Werkstück 4 zwischen sich eingespannt halten. Die beiden Vorrichtungen 2 und das nicht-magnetische Werkstück 4 liegen auf einer Arbeitsplatte 6 auf, die magnetisch aktivierbar ist, also beispielsweise einen oder mehrere integrierte Elektromagneten bzw. einen oder mehrere manuell aktivierbare Permanentmagneten aufweist oder selbst als Elektromagnet oder Permanentmagnet ausgebildet ist, und somit im aktivierten Zustand ein permanentes Magnetfeld ausbildet.

Neben der dargestellten Möglichkeit des Einspannens des Werkstücks 4 zwischen zwei erfindungsgemäßen Vorrichtungen 2 kann auch lediglich eine Vorrichtung 2 das Werkstück 4 gegen eine feste Fläche pressen, und genauso können zur weiteren seitlichen Fixierung des Werkstücks 4 insgesamt vier Vorrichtungen 2 an den vier Seiten des Werkstücks 4 eingesetzt werden.

Die erfindungsgemäßen Vorrichtungen 2 werden bei ihrem Einsatz auf die deaktivierte Arbeitsplatte 6 aufgelegt und an zwei gegenüberliegende Seiten des Werkstücks 4 herangeschoben. Anschließend erfolgt die Aktivierung der magnetischen Arbeitsplatte 6, wodurch aufgrund der nachstehend beschriebenen Konstruktion der Vorrichtungen 2 das Werkstück 4 zwischen den beiden Vorrichtungen 2 automatisch und sicher fixiert wird. Nach dem Bearbeiten des Werkstücks 4 mittels beispielsweise einer Schleifmaschine oder eines anderen Bearbeitungswerkzeugs wird die Arbeitsplatte 6 magnetisch deaktiviert, und dadurch lösen sich die Vorrichtungen 2 automatisch wieder von dem Werkstück 4 und können anschließend aus der ursprünglichen, lediglich an die Seiten des Werkstücks 4 herangeschobenen Position wieder entnommen werden.

Die erfindungsgemäße Vorrichtung 2 zum Einspannen eines Werkstücks 4 kann in verschiedenen Größen und Ausführungsformen hergestellt werden. Um die Vorrichtung 2 universell einsetzbar zu gestalten, sollte die Gesamthöhe der Vorrichtung 2 geringer sein als das flachste zu bearbeitende Werkstück 4, in einer Ausführungsform z.B. 16 mm. Da üblicherweise die Fläche der Arbeitsplatte 6 auch begrenzt ist, kann eine bevorzugte Länge der Vorrichtung 200 mm und eine bevorzugte Breite der Vorrichtung beispielsweise 100 mm betragen.

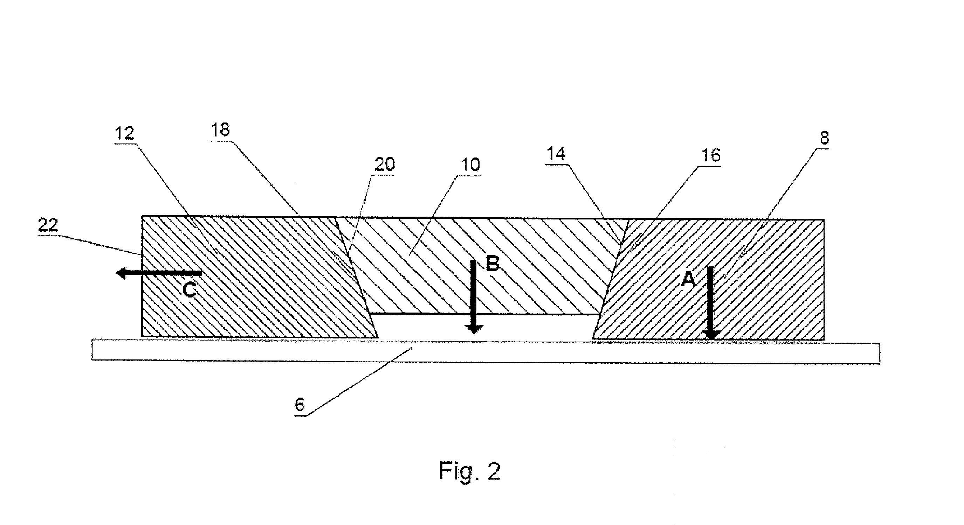

In Fig. 2 wird das erfindungsgemäße Prinzip der Vorrichtung 2 zum Einspannen eines Werkstücks 4 erläutert. Die erfindungsgemäße Vorrichtung 2 umfasst dabei im wesentlichen drei Funktionselemente: einen magnetischen Backen 8, einen magnetischen Keil 10 und einen nicht-magnetischen Schlitten 12. In der hier dargestellten bevorzugten Ausführungsform weist der Backen 8 eine dem Keil 10 zugewandte erste schräge Seitenfläche 14 derart auf, dass sich der Backen 8 nach unten hin verbreitert. Gleichzeitig weist der Keil 10 eine dem Backen 8 zugewandte schräge zweite Seitenfläche 16 derart auf, dass sich der Keil 10 nach unten hin verjüngt. Außerdem weist der magnetische Keil 10 eine erste schräge Seitenfläche 18 derart auf, dass sich der Keil 10 nach unten hin auch an dieser ersten Seitenfläche 18 verjüngt. Der Keil 10 besitzt damit vorzugsweise einen Querschnitt in Form eines gleichschenkligen Trapezes.

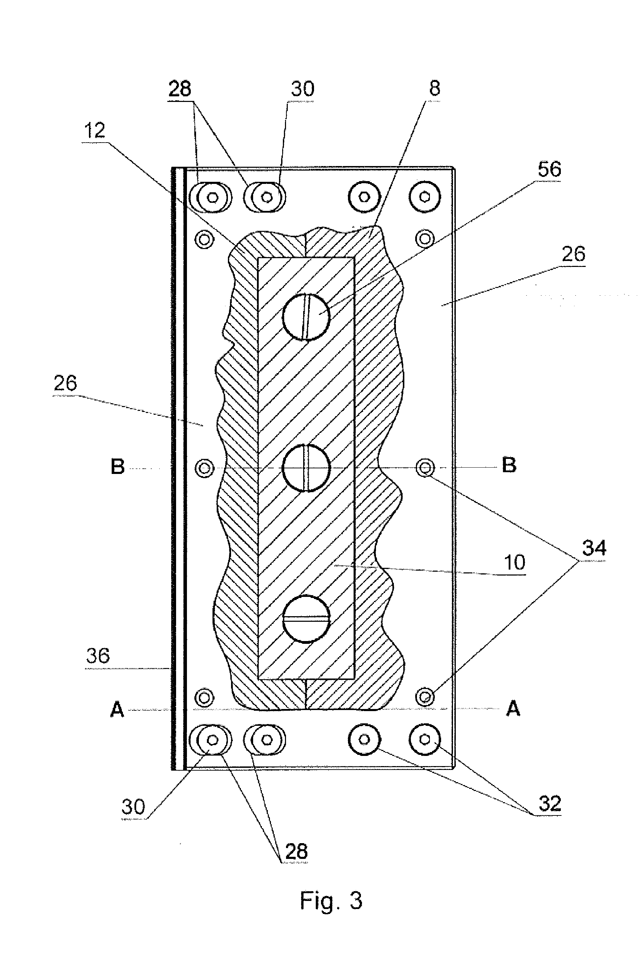

Angrenzend an die erste Seitenfläche 18 des Keils 10 weist der Schlitten 12 eine schräge zweite Seitenfläche 20 auf, welche sich nach unten hin verbreitert, so dass auch der Schlitten 12 in seinem unteren Bereich breiter ist als in seinem oberen Bereich. Die erste Seitenfläche 22 des Schlittens 12 wiederum dient zur Herstellung des Kontaktes mit dem Werkstück 4. Vorzugsweise besitzen Schlitten 12 und Backen 8 eine identische geometrische Grundform, sind jedoch entgegengesetzt gedreht angeordnet. Bevorzugt ist diese Grundform in Draufsicht winkelförmig, wie aus Fig. 3 hervorgeht, so dass der Keil 10 zwischen den Winkelstegen von Backen 8 und Schlitten 12 liegt. Ebenso ist es möglich, je nach Geometrie des einzuspannenden Werkstücks 4 eine andere Geometrie der ersten Seitenfläche 22 des Schlittens 12 vorzusehen, also z.B. vieleckig, rund, oval etc.

Das erfindungsgemäße Grundprinzip wird nun anhand von Fig. 2 erläutert. Der Backen 8 wird beim Aktivieren der Arbeitsplatte 6 mittels Magnetkraft sofort in Richtung des Pfeils A an Ort und Stelle fixiert. Somit dient er als Gegenhalt zur Kraft, mit der die Vorrichtung 2 gegen das Werkstück 4 drückt. Der Keil 10 hat in seiner oberen Ruheposition, wie sie in Fig. 2 dargestellt ist, einen vorbestimmten Abstand zur Arbeitsplatte 6. Dieser Abstand beträgt vorzugsweise höchstens 4 mm, mehr bevorzugt höchstens 2 mm, und besonders bevorzugt höchstens 0,5 mm. Je nach Abstand des Keils 10 von der Arbeitsplatte 6 und der gewünschten Spannkraft können auch die Winkel der Seitenflächen 16, 18 des Keils 10 sowie die Größe der Seitenflächen 16, 18 des Keils 10 angepasst werden.

Wenn die Arbeitsplatte 6 magnetisch aktiviert wird, wird der Keil 10 mittels Magnetkraft der Arbeitsplatte 6 in Richtung des Pfeils B von der oberen Ruheposition in eine untere Arbeitsposition gezogen, in der er Kontakt mit der Arbeitsplatte 6 hat. Der Abstand des Keils 10 zur Arbeitsplatte 6 reicht aus, damit der Backen 8 immer vor dem Keil 10 fixiert wird. Aufgrund der schiefen Ebenen an den Seitenflächen 16, 18 des Keils 10 wird bei der Abwärtsbewegung des Keils 10 gleichzeitig eine horizontale Bewegung des verfahrbaren Schlittens 12 in Richtung des Pfeils C erzielt. Durch die Fixierung des Backens 8 an der Arbeitsplatte 6 wird gewährleistet, dass sich immer nur der Schlitten 12 bewegen kann. Da der nicht-magnetische Schlitten 12 nicht von der aktivierten magnetischen Arbeitsplatte 6 angezogen wird, kann er die horizontale Bewegung ausführen, welche durch die schrägen Seitenflächen 16, 18 des Keils 10 erzwungen wird. Wird der Vorschub durch das Werkstück 4 unterbrochen, weil die erste Seitenfläche 22 des Schlittens 12 am Werkstück 4 anschlägt, übt der Schlitten 12 aufgrund der dauerhaften Anziehung des Keils 10 durch die Arbeitsplatte 6 permanenten Druck auf das Werkstück 4 aus. Der Druck bleibt solange erhalten, bis die Arbeitsplatte 6 magnetisch deaktiviert wird.

Die Seitenflächen 16, 18 des Keils 10 nehmen vorzugsweise einen Winkel von zwischen 3° und 10°, vorzugsweise zwischen 5° und 7°, besonders bevorzugt exakt 6° zur Vertikalen ein. Bei einer angenommenen Höhendifferenz von 0,5 mm zwischen oberer Ruheposition und unterer Arbeitsposition des Keils 10 erhält man bei einem Winkel zur Vertikalen von 6° einen Gesamtvorschub des Schlittens 12 von 0,21 mm. Ein Vorschub in dieser Größenordnung ist ausgezeichnet geeignet, das Werkstück 4 sicher festzuspannen und gleichzeitig nicht zu beschädigen.

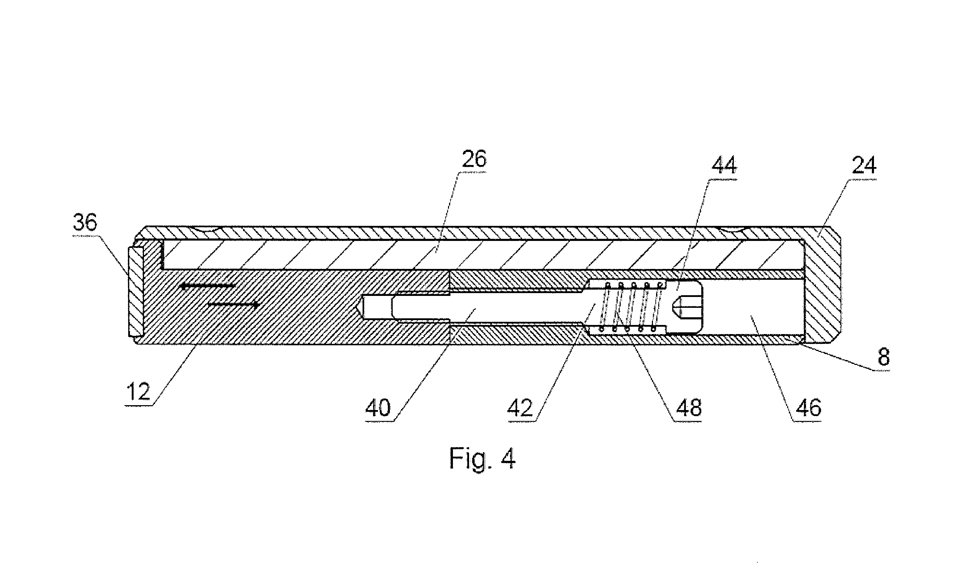

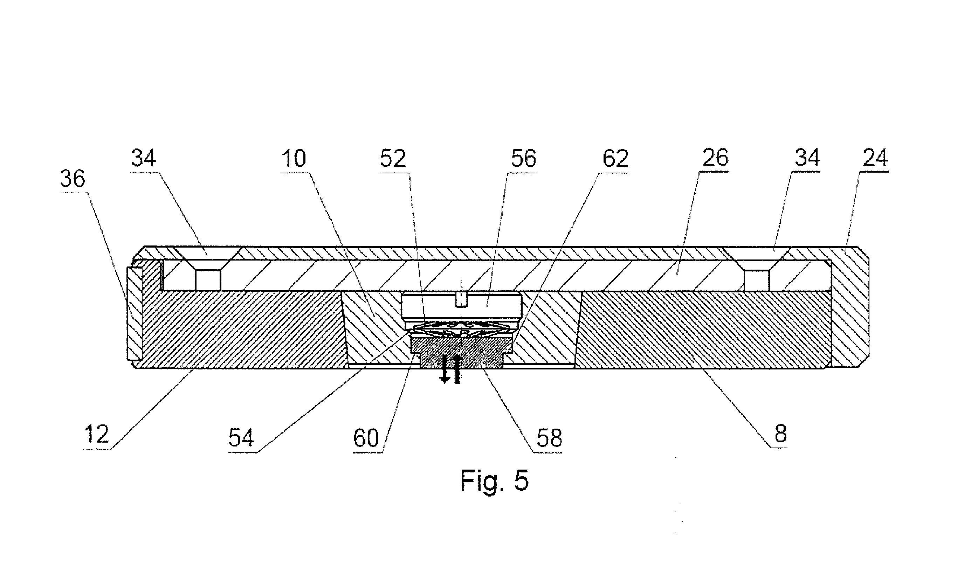

Fig. 3 ist eine Draufsicht auf eine bevorzugte Ausführungsform der erfindungsgemäßen Vorrichtung 2 zum Einspannen eines Werkstücks 4, wobei die in Fig. 4 und 5 dargestellte Oberschale aus Gründen der Anschaulichkeit weggelassen wurde und außerdem der Deckel 26 im Bereich des Keils 10 abgebrochen dargestellt ist, um die Anordnung des Keils 10 in der Gesamtvorrichtung besser zu veranschaulichen. Beim dargestellen Ausführungsbeispiel würde der Deckel 26 in Wirklichkeit den Keil 10 vollständig überdecken und wäre der Deckel 26 wiederum von der Oberschale 24 überdeckt.

Der in Fig. 3 dargestellte Deckel 26 weist vier Langlöcher 28 auf, in denen am Schlitten 12 befestigte Führungselemente 30, im vorliegenden Fall Senkschrauben, geführt sind. Diese lenken den Schlitten 12 in die richtige Bahn, denn beim Vorschub des Schlittens 12 bewegen sich die Führungselemente 30 in den Langlöchern 28 mit und verbinden gleichzeitig Schlitten 12 und Deckel 26. Außerdem dient der Deckel 26 als oberer Anschlag für den Keil 10 in dessen oberer Ruheposition und als Fixierung für den Backen 8, welcher wiederum beispielsweise mittels Senkschrauben 32 am Deckel 26 befestigt ist. Der Deckel 26 wiederum kann mittels Befestigungsschrauben 34 mit der Oberschale 24 (siehe Fig. 5) verschraubt sein. Der Schlitten 12 kann an seiner ersten Seitenfläche 22 eine Gummilippe 36 aufweisen, um eine gleichmäßige Einspannung des Werkstücks 4 über die gesamte Kontaktfläche zu gewährleisten.

Nach erfolgter Bearbeitung des Werkstücks 4 ist es gewünscht, dass für den Bearbeiter keine zusätzlichen Handgriffe entstehen. Aus diesem Grund ist die erfindungsgemäße Vorrichtung 2 vorzugsweise mit einer Rückstellfunktion ausgestattet. Nach Deaktivierung der Arbeitsplatte 6 sollten also sowohl der Keil 10 als auch der Schlitten 12 wieder in ihre Ausgangsposition zurückgeführt werden. Dieses Problem wird auf zweifache Weise gelöst.

Zunächst ist eine in Fig. 4 näher dargestellte horizontale Federanordnung 38 vorgesehen, die den Schlitten 12 bei deaktivierter Arbeitsplatte 6 wieder zurück in Richtung Backen 8 drückt. Die horizontale Federanordnung 38 umfasst mindestens eine, vorzugsweise zwei im Schlitten 12 befestigte, seitlich am Keil 10 vorbeilaufende horizontale Schrauben 40, von denen zumindest ein Teil des Schafts 42 und der Kopf 44 in einer in Richtung des Schlittens 12 geschlossenen Ausnehmung 46 im Backen 8 angeordnet sind. Außerdem umfasst die horizontale Federanordnung 38 eine Schraubenfeder 48, die den Teil des Schaftes 42 innerhalb der Ausnehmung 46 umgibt und bei Bewegung des Schlittens 12 weg vom Backen 8 durch den Kopf 44 der Schraube 40 zusammengedrückt wird. Aufgrund dieser Konstruktion wird durch die Schraubenfedern 48 eine Kraft auf den Schlitten 12 entgegen der Vorschubkraft ausgeübt. Die Schraubenfedern 48 sind vorzugsweise so dimensioniert, dass sie dem Vorschub des Schlittens 12 mit einer Kraft von ca. 30 N entgegenwirken. Auch andere Federanordnungen sind denkbar.

Die von der horizontalen Federanordnung 38 ausgeübte Kraft wird in vielen Fällen nicht ausreichen, um den Keil 10 von der unteren Arbeitsposition in seine obere Ruheposition zu drücken. Aus diesem Grund ist eine in Fig. 5 dargestellte vertikale Federanordnung 50 vorgesehen, die den Keil nach Deaktivierung der Arbeitsplatte 6 vertikal von dieser wegdrückt. Die vertikale Federkraft dieser vertikalen Federanordnung 50 unterstützt die horizontale Federanordnung 38 und sorgt gemeinschaftlich mit dieser dafür, dass sich die Vorrichtung 2 automatisch in die Grundstellung zurücksetzt, sobald der Magnet der Arbeitsplatte 6 abgeschaltet wird.

Die vertikale Federanordnung 50 weist dabei mindestens ein Federelement 52 auf, das in einer Ausnehmung 54 des Keils 10 aufgenommen ist. Aufgrund der gewünschten niedrigen Gesamtbauhöhe können vorzugsweise zwei in Reihe angeordnete Sternfedern als Federelement 52 verwendet werden. Das Federelement 52 sitzt vorzugsweise zwischen einem oberen Deckelelement 56, das am Keil 10 fixiert ist, vorzugsweise einem Gewindestift, und einem unteren Passstift 58. Der Passstift 58 ist vertikal beweglich im Keil 10 angeordnet und ragt im Ruhezustand des Keils 10 nach unten aus diesem hervor und liegt im Ruhezustand des Keils 10 mit einer Schulter 60 an einem inneren Anschlag 62 des Keils 10 auf.

Wird die Arbeitsplatte 6 magnetisch aktiviert, zieht sie den Keil 10 auf Kontakt und der Passstift 58 wird in der Ausnehmung 54 versenkt. Bei Deaktivierung der Arbeitsplatte 6 drückt das Federelement 52 auf das obere Deckelelement 56, welches fest mit dem Keil 10 verbunden ist, und bringt damit den Keil 10 wieder zurück in seine obere Ruheposition. Um eine gleichmäßige Vertikalbewegung des Keils 10 zu gewährleisten, können vorzugsweise mehrere Passstifte 58 vorgesehen sein.

Es können auch andere Federanordnungen verwirklicht sein. Die Federelemente 52 sind vorzugsweise derart ausgestaltet, dass der Keil 10 mit ca. 40 N nach oben gedrückt wird.

Für einen Einsatz der erfindungsgemäßen Vorrichtung 2 zum Einspannen eines Werkstücks 4 in einer Schleifmaschine müssen alle verwendeten Materialien resistent gegen die 01-Wasser-Emulsion sein, die während des gesamten Schleifvorganges zugeführt wird und zur Kühlung dient. Um dennoch möglichst wenig Angriffsfläche zu bieten, sind die funktionellen Teile mit dem Deckel 26 bzw. der Oberschale 24 geschützt.

Die magnetischen Teile der Vorrichtung 2, nämlich der Backen 8 und der Keil 10, können beispielsweise aus Stahl gefertigt sein. Um diese Elemente korrosionsbeständig zu machen, können sie zusätzlich chemisch vernickelt sein. Auch andere magnetische Werkstoffe sind denkbar.

Der Deckel 26, das obere Deckelelement 56 und die Passstifte 58 sind vorzugsweise aus nicht-rostendem Stahl gefertigt, während der Schlitten 12 vorzugsweise aus Aluminium oder einer Aluminiumlegierung gefertigt ist. Auch der Schlitten 12 kann aus einem anderen nicht-magnetischen Material gefertigt sein. Er kann auch eine Oberflächenbeschichtung zum Korrosionsschutz und zur Verringerung der Gleitreibung auf der Arbeitsplatte 6 und am Keil 10 aufweisen. Die Oberschale 24 kann auf ähnliche Weise aufgebaut sein.

Neben den dargestellten Ausführungsform sind verschiedene andere Geometrien denkbar, solange der Keil 10 während seiner Vertikalbewegung über die erste schräge Seitenfläche 18 die Horizontalbewegung des Schlittens 12 bewirkt.

## Patentansprüche

1. Vorrichtung zum Einspannen eines Werkstücks (4) auf einer aktivierbaren magnetischen Arbeitsplatte (6), mit
einem magnetischen Backen (8), der im aktivierten Zustand der Arbeitsplatte (6) magnetisch auf der Arbeitsplatte (6) fixiert ist,
einem neben dem Backen (8) angeordneten magnetischen Keil (10), der zwischen einer oberen Ruheposition im deaktivierten Zustand der Arbeitsplatte (6) und einer unteren Arbeitsposition im aktivierten Zustand der Arbeitsplatte (6) vertikal verschiebbar ist, wobei der Keil (10) eine dem Backen (8) abgewandte schräge erste Seitenfläche (18) derart aufweist, dass sich der Keil (10) nach unten hin verjüngt, und
einem über die Arbeitsplatte (6) horizontal verfahrbaren, nicht-magnetischen Schlitten (12), der eine erste Seitenfläche (22) zum Kontakt mit dem Werkstück (4) aufweist und der eine schräge zweite Seitenfläche (20) derart aufweist, dass sich der Schlitten (12) nach unten hin verbreitert, wobei die schräge erste Seitenfläche (18) des Keils (10) beim Wechsel von der Ruheposition in die Arbeitsposition des Keils (10) an der schrägen zweiten Seitenfläche (20) des Schlittens (12) entlanggleitet und dadurch eine horizontale Verschiebung des Schlittens (12) bewirkt.

2. Vorrichtung nach Anspruch 1, **dadurch gekennzeichnet, dass** der Backen (8) eine erste schräge Seitenfläche (14) derart aufweist, dass sich der Backen (8) nach unten hin verbreitert, und dass der Keil (10) eine dem Backen (8) zugewandte schräge zweite Seitenfläche (16) derart aufweist, dass sich der Keil (10) nach unten hin verjüngt, wobei die schräge zweite Seitenfläche (16) des Keils (10) beim Wechsel von der Ruheposition in die Arbeitsposition des Keils (10) an der schrägen ersten Seitenfläche (14) des fixierten Backens (8) entlanggleitet und dadurch die horizontale Verschiebung des Schlittens (12) verstärkt.

3. Vorrichtung nach Anspruch 1 oder 2, **dadurch gekennzeichnet, dass** sie einen Deckel (26) aufweist, der fest mit dem Backen (8) verbunden ist.

4. Vorrichtung nach Anspruch 3, **dadurch gekennzeichnet, dass** der Deckel (26) Langlöcher (28) aufweist, in denen am Schlitten (12) befestigte Führungselemente (30), vorzugsweise Senkschrauben, geführt sind.

5. Vorrichtung nach einem der vorangehenden Ansprüche, **dadurch gekennzeichnet, dass** der Backen (8) und der Keil (10) aus Stahl gebildet sind und der Schlitten (12) aus Aluminium gebildet ist.

6. Vorrichtung nach einem der vorangehenden Ansprüche, **dadurch gekennzeichnet, dass** die Neigung der schrägen ersten Seitenfläche (18) des Keils (10) zur Vertikalen der Neigung der schrägen zweiten Seitenfläche (20) des Schlittens (12) zur Vertikalen entspricht.

7. Vorrichtung nach einem der vorangehenden Ansprüche, **dadurch gekennzeichnet, dass** die schräge erste Seitenfläche (18) des Keils (10) einen Winkel zur Vertikalen von zwischen 3° und 10°, bevorzugt zwischen 5° und 7°, mehr bevorzugt 6° aufweist.

8. Vorrichtung nach einem der Ansprüche 2 bis 7, **dadurch gekennzeichnet, dass** die Neigung der schrägen zweiten Seitenfläche (16) des Keils (10) zur Vertikalen der Neigung der schrägen ersten Seitenfläche (14) des Backens (8) zur Vertikalen entspricht.

9. Vorrichtung nach Anspruch 8, **dadurch gekennzeichnet, dass** die schräge zweite Seitenfläche (16) des Keils (10) einen Winkel zur Vertikalen von zwischen 3° und 10°, bevorzugt zwischen 5° und 7°, mehr bevorzugt 6° aufweist.

10. Vorrichtung nach einem der vorangehenden Ansprüche, **dadurch gekennzeichnet, dass** die maximale Höhendifferenz zwischen Ruheposition und Arbeitsposition des Keils (10) 4 mm, bevorzugt 2 mm, mehr bevorzugt 0,5 mm beträgt.

11. Vorrichtung nach einem der vorangehenden Ansprüche, **dadurch gekennzeichnet, dass** sie eine horizontale Federanordnung (38) aufweist, die den Schlitten (12) bei deaktivierter Arbeitsplatte (6) in Richtung Backen (8) drückt.

12. Vorrichtung nach Anspruch 11, **dadurch gekennzeichnet, dass** die horizontale Federanordnung (38) mindestens eine im Schlitten (12) befestigte, seitlich am Keil (10) vorbeilaufende horizontale Schraube (40) aufweist, von der zumindest ein Teil des Schafts (42) und der Kopf (44) in einer in Richtung des Schlittens (12) geschlossenen Ausnehmung (46) im Backen (8) angeordnet sind, und außerdem eine Schraubenfeder (48) aufweist, die den Teil des Schaftes (42) der Schraube (40) innerhalb der Ausnehmung (46) umgibt und bei Bewegung des Schlittens (12) weg vom Backen (8) durch den Kopf (44) der Schraube (40) zusammengedrückt wird.

13. Vorrichtung nach einem der vorangehenden Ansprüche, **dadurch gekennzeichnet, dass** sie eine vertikale Federanordnung (50) aufweist, die den Keil (10) bei deaktivierter Arbeitsplatte (6) nach oben drückt.

14. Vorrichtung nach Anspruch 13, **dadurch gekennzeichnet, dass** die vertikale Federanordnung (50) mindestens ein Federelement (52) aufweist, das in einer Ausnehmung (54) des Keils (10) aufgenommen ist.

15. Vorrichtung nach Anspruch 14, **dadurch gekennzeichnet, dass** das Federelement (52) von einem oberen Deckelelement (56), das am Keil (10) fixiert ist, und einem unteren Passstift (58) eingeschlossen ist, wobei der Passstift (58) vertikal beweglich im Keil (10) angeordnet ist und im Ruhezustand des Keils (10) nach unten aus diesem hervorragt und mit einer Schulter (60) an einem inneren Anschlag (62) des Keils (10) aufliegt.
